# EUROPÄISCHE PATENTSCHRIFT

(11) **EP 1 066 670 B1**
(45) Veröffentlichungstag und Bekanntmachung des Hinweises auf die Patenterteilung: **07.07.2004**
(21) Anmeldenummer: 98921406.9
(22) Anmeldetag: 31.03.1998
(51) Int. Cl.: H02G 3/04

(54) **SCHUTZUMMANTELUNG**
PROTECTIVE SHEATH
GAINE PROTECTRICE

(43) Veröffentlichungstag der Anmeldung: 10.01.2001
(73) Patentinhaber: Hänsel Verbundtechnik GmbH, 58640 Iserlohn (DE); Ates Advanced Technical Engineering Systems AG, 9423 Altenrhein (CH)
(72) Erfinder: KRAUSE, Ulrich, D-58636 Iserlohn (DE); SCHULTE, Wolfgang, D-53119 Bonn (DE)
(74) Vertreter: Patentanwälte Dr. Solf & Zapf
(86) Internationale Anmeldenummer: PCT/EP1998/001856
(87) Internationale Veröffentlichungsnummer: WO 1999/050943

(56) Entgegenhaltungen:
- EP-A- 0 499 089
- EP-A- 0 742 626
- FR-A- 2 753 654

## Beschreibung

Die Erfindung betrifft eine Schutzummantelung, insbesondere zur Eindämmung von Klappergeräuschen für Kabel, insbesondere für Kabelbäume, Leitungen, Litzen, Hüllrohre und dgl., z.B. in Kraftfahrzeugen nach dem Oberbegriff des Anspruchs 1.

Kabel, Leitungen, Hüllrohre und dgl., welche in Fahrzeugen oder Anlagen verlegt werden, können durch die üblicherweise in Fahrzeugen oder in Anlagen bzw. Maschinen auftretenden Vibrationen sog. Klappergeräusche erzeugen. Darüber hinaus besteht die Gefahr, daß durch die Vibrationen die Kabelisolierungen bzw. Leitungs- oder Rohrmäntel durch die Vibrationsbewegungen und Relativbewegungen, insbesondere z.B. an Blechkanten in Fahrzeugen aufgerieben bzw. aufgescheuert werden. Derartige Probleme treten z.B. sowohl in Land-, Wasser- wie auch in Luftfahrzeugen sowie in industriellen Anlagen oder im Maschinenbau auf. (Im folgenden wird häufig stellvertretend für derartige langgestreckte, zu schützende Gegenstände das Wort "Kabelbaum" verwendet, ohne daß dadurch die Erfindung eingeschränkt wird).

Um Klappergeräusche zu vermeiden, sind Ummantelungen bestehend aus einem Polyurethanschaumstoffstreifen mit einer glatten Polyurethanhaut auf der Außenseite und einem flächigen Klebestoffauftrag auf der Innenseite bekannt. Die zu ummantelnden Kabelbäume werden auf die eine Hälfte der Innenseite des Schaumstoffstreifens aufgeklebt, anschließend wird die andere Hälfte des Polyurethanschaumstoffstreifens umgeschlagen und sowohl mit Kabeln des Kabelbaums als auch mit der einen Hälfte des Schaumstoffstreifens teilbereichsweise verklebt. Hierdurch entsteht ein flaches Schlauchelement mit einer relativ glatten Polyurethanaußenhaut. Derartige Ummantelungen sind zwar einfach herzustellen, aber schwer zu verarbeiten. Sie haben daher in der praktischen Anwendung Nachteile. Zum einen wird ein flaches und relativ breites Schlauchgebilde erzeugt, das bei der Verlegung im Fahrzeug um Ecken und durch schmalen Durchgänge Schwierigkeiten bereitet. Außerden hält die Polyurethanaußenhaut einer scheuernden oder reibenden Beanspruchung nicht ausreichend stand; sie wird insbesondere in Kraftfahrzeugen durch den Kontakt mit scharfen Blechkanten frühzeitig zerstört, so daß der Klapper- und Scheuerschutz verloren geht. Darüber hinaus ist bei der Verwendung von Polyurethanschaum-Material nachteilig, daß dieses im Falle eines Brandes toxische Gase, z.B. Zyanide, erzeugt.

Des weiteren sind Schutzummantelungen für elektrische Kabelbäume in Form von Wellrohren bekannt, wobei die Wellrohre aus harten, festen Kunststoffen bestehen. Derartige Wellrohre sind über die gesamte Länge geschlitzt, so daß die Kabel einzeln durch den Schlitz eingelegt werden können. Um zu verhindern, daß das harte Kunststoffwellrohr Klappergeräusche erzeugt, wird es mit Filzstreifen umhüllt, wobei die Längskanten der Filzstreifen zum Zwecke der Fixierung ebenfalls in den Längsschlitz eingesteckt werden. Hierbei ist nachteilig, daß es einen hohen Arbeitsaufwand erfordert, die Kabel und die Filzstreifenkanten in einen Längsschlitz des Wellrohres einzuführen. Darüber hinaus besteht die Gefahr, daß die Filzkanten bei Vibrationen wieder aus dem Längsschlitz rutschen, so daß der Verbund und damit der Schutz verloren geht. Darüber hinaus sind die Kabel im Wellrohr nicht fixiert, woraus ebenfalls Geräusche resultieren können.

Aus der DE 295 10 907 U1 ist eine Schutzummantelung für Kabelbäume bekannt, welche einen Filz- oder Schaumstoffstreifen aufweist, dessen Innenseite mit Klebstoff belegt ist, wobei die Breite des Filz- oder Schaumstoffstreifens auf den Umfang des Kabelbaums abgestimmt ist. An der Außenseite des Filz- bzw. Schaumstoffstreifens ist eine abriebfeste Materialbahn befestigt, welche bezüglich der Längserstreckung des Filz- bzw. Schaumstoffstreifens seitlich versetzt ist, so daß sie auf einer Längsseite über den Filz- bzw. Schaumstoffstreifen übersteht, während an der gegenüberliegenden Längskante ein Bereich des Filz- oder Schaumstoffstreifens frei bleibt. Der Filz- oder Schaumstoffstreifen wird nach dem Aufkleben auf den zu schützenden Gegenstand zu einem Schlauch geformt, wobei der Überstand der Materialbahn überlappend den Stoßbereich des Filz- bzw. Schaumstoffschlauches überklebt und so die Längskante schließt. Die Materialbahn soll bevorzugt aus einem Polyestervlies ausgebildet sein, wobei die Materialbahn mit dem Filz- bzw. Schaumstoffstreifen durch teil- oder ganzflächiges Verkleben, Vernadeln oder Vernähen verbunden ist. Der Klebstoff auf dem Überstand der Materialbahn, mit welchem die Überlappung des Filz- bzw. Schaumstoffschlauchabschnitts geschlossen werden soll, soll ein selbstklebender Klebstoff sein, welcher mit einem Schutzpapier abgedeckt ist. Als Material für den Schaumstoffstreifen sollen Polyurethanschaum, Polyethenschaum oder Zellkautschuk eingesetzt werden.

Bei dieser bekannten Ummantelung ist von Nachteil, daß der Schaumstoffstreifen bzw. der Filzstreifen an den Durchmesser der zu schützenden langgestreckten Gegenstände, z.B. Kabelbäume, so angepaßt sein muß, daß die Überlappung der Schaumstoffkanten gewährleistet ist. Somit müssen für unterschiedliche Durchmesser unterschiedlich bemessene, exakt angepasste Ummantelungen bereitgehalten werden. Darüber hinaus ist nachteilig, daß der Schaumstoffstreifen relativ steif ist und in der Rohrform eine relativ große auswärts gerichtete Rückformkraft erzeugt, die eine entsprechend hohe Spannung auf den Überschlagverschluß ausübt. Insbesondere im Fall höherer Umgebungstemperaturen und bei engeren Radien besteht die Gefahr, daß die Ummantelung aufgeht, so daß der Schutz verloren geht. Darüber hinaus ist auch in diesem Fall von Nachteil, daß bei Temperatureinwirkung toxische Gase entstehen. Zudem ist das Element relativ dick und steif, so daß die Verlegung beeinträchtigt wird. Hinzu kommt, daß das Abziehen des Schutzpapiers einen erheblichen Aufwand verursacht und zusätzlich Entsorgungsprobleme bereitet, da es sich bei dem Silikonpapier um Sondermüll handelt. Zudem ist die Montage, insbesondere bei längeren Abschnitten äußerst schwierig. Wenn bei der Montage der Klebestreifen beschädigt wird, ist die Klebkraft nicht mehr vorhanden.

Aus der DE 297 11 387 U1 ist eine Ummantelung für langgestreckte Gegenstände bekannt, die für verschiedene Durchmesser der zu ummantelnden Gegenstände verwendet werden kann. Diese Ummantelung weist einen innen liegenden Schaumstoffstreifen und eine außen liegende Gewebebahn auf, die mit dem Schaumstoffstreifen fest verbunden ist und entlang der Längskanten des Schaumstoffstreifens beidseitig über diesen übersteht, wobei beide überstehende Streifen an der Innenseite des überstehenden Geweberandes einen Klebstoffauftrag aufweisen. Dieser Klebstoffauftrag ist mit einem Schutzpapier abgedeckt. Die Gewebebahn ist ein nicht näher beschriebenes Schlingengewebe, wobei die Schlingen als Haft- bzw. Verhakpartner für die Hakenorgane eines Hakenträgerelements ausgebildet sind, so daß die Ummantelung mit dem Hakenträgerelement nach Art eines Klettverschlusses lösbar verbindbar ist. Zur Befestigung der Ummantelung beispielsweise an einem Kabelbaum wird die Umhüllung mit einem überstehenden Geweberand an eine zu umhüllenden Kabelbaum angelegt und gegen den Kabelbaum gedrückt. Daraufhin wird die Ummantelung um den Kabelbaum herumgewickelt, bis der Schaumstoffstreifen mit seiner vollen Breite das Kabel umgibt und ggf. überlappt. Anschließend wird der mit Kleber versehene weiter überstehende Geweberand auf die Außenseite der bereits auf den Kabelbaum verlegten Gewebebahn gedrückt.

Bei dieser bekannten Ummantelung ist von Nachteil, daß zunächst Schutzpapier von Klebflächen entfernt werden muß. Zudem muß die Ummantelung entlang der Längskante der Ummantelung an das Kabel geklebt und dann quer zur Längserstreckung um das Kabel gelegt werden. Bei langen Kabelbäumen ist diese Arbeit schwierig, wenn an allen Stellen des Kabelbaums ein gleichmäßiges Andrücken erreicht werden soll. Die Ummantelung muß zum Verkleben auf der gesamten Länge straff gezogen werden, was nicht immer einwandfrei gelingt. Des weiteren ist generell bei Schaumstoffen von Nachteil, daß die Schaumstoffe Scheuer- oder Reibbelastungen relativ ungenügend widerstehen.

FR-A-2 753 654 offenbart eine Umhüllung für Kabelbündel in Automobilen. Die Umhüllung weist eine erste Schicht aus nachgiebigem, stabilem Material sowie eine zweite Schicht aus einem metastabilen Material auf. Das metastabile Material zieht sich unter einem Einfluss von Wärme zusammen. Das Zusammenziehen der metastabilen Schicht einer Bahn des Umhüllungsmaterials, auf der ein Kabelbündel angeordnet ist, bewirkt die Bildung einer zylindrischen Umhüllung um das Kabelbündel.

Aufgabe der Erfindung ist es, eine Schutzummantelung, insbesondere für Kabel, Kabelbäume, Leitungen und dgl. zu schaffen, die Klappergeräusche wirkungsvoll dämmt, leicht zu montieren ist und insbesondere eine hohe Abrieb- bzw. Aufreibfestigkeit aufweist.

Diese Aufgabe wird mit einer Schutzummantelung mit den Merkmalen des Anspruchs 1 gelöst. Vorteilhafte Weiterbildungen der Erfindung sind in Unteransprüchen gekennzeichnet.

Erfindungsgemäß ist die Schutzummantelung in Form eines Wickelbandes ausgebildet mit einem im wesentlichen zweischichtigen Aufbau mit zwei textilen Schichten, wobei das Wickelband eine bezüglich des zu schützenden Objekts innere textile Schicht aus einem Vlies und eine bezogen auf das zu schützende Objekt äußere textile Schicht aus einem Kettstuhlwirkwaren-Velours aufweist. Die beiden textilen Schichten sind über eine Verklebung miteinander verbunden, wobei der Klebstoff vorzugsweise teilbereichsweise beispielsweise in Form eines wärmeaktivierbaren Vlieses oder Films aufgebracht ist. Beide textile Schichten sind aus synthetischen Fasern, insbesondere Polyamid oder Polyester hergestellt, wobei das Vlies vorzugsweise ein Nadelvlies ist. Die äußere textile Schicht in Form eines Kettstuhlwirkwaren-Velours ist vorzugsweise eine zweibarrige Kettstuhlwirkwaren-Veloursware mit einer gewirkten Unterkette und einer in die Unterkette eingewirkten Oberkette, wobei die Oberkette von der Stoff- bzw. Textilebene nach außen vorstehende, hochgerauhte Veloursschlingen ausbildet. Derartige hochgerauhte Veloursschlingenwaren sind bei der Verwendung als Klettbänder als Gegenstück zu sogenannten Pilzbändern bekannt. Erfindungsgemäß werden die hochgerauhten Verloursschlingen jedoch übermäßig hoch ausgebildet.

Die erfindungsgemäße Schutzummantelung wird von einer Rolle helixförmig auf das zu schützende Objekt gewickelt, wobei die vollflächig mit einer Klebschicht bedeckte Innenseite der Schutzummantelung fest auf das zu schützenden Objekt gezogen wird. Dabei wird mit einer geringen Überlappung der Windungen gewickelt. Erfindungsgemäß sind der Kleber und die Veloursschlingenstruktur derart aufeinander abgestellt, daß beim Abrollen von der Rolle weder die Kleberschicht noch die Veloursschlingen negativ beeinträchtigt werden. Darüber hinaus ist der Kleber bezüglich seiner Haftkraft derart auf die Verklebung zwischen den textilen Schichten angepaßt, daß die Abrollkraft von der Rolle geringer ist als die erforderliche Kraft zur Trennung der beiden textilen Schichten voneinander.

Das Abrollen von einer Rolle und das helixartige Aufwickeln auf einen Kabelbaum erleichtert die Montage erheblich. Darüber hinaus entfallen Schutzpapiere. Des weiteren hat sich in überraschender Weise ergeben, daß mit der speziellen Anordnung und Ausführung der textilen Schichten, nämlich einer inneren Vliesschicht, insbesondere Nadelvliesschicht, und einer darauf z.B. mit einer teilbereichsweisen Verklebung, insbesondere einer thermoplastischen Vliesverklebung angeordneten Kettstuhlwirkwaren-Veloursschicht eine Abriebfestigkeit erzielt wird, die bisher von keiner vergleichbaren Schutzummantelung erbracht wurde. Die Abriebfestigkeit des Gesamtverbunds ist sogar erheblich höher, als die Abriebfestigkeit der Einzelschichten. Bewegungen werden durch den Verbund kompensiert, die von einer der Schichten allein nicht verkraftet werden können. Die erfindungsgemäße Ummantelung kann relativ dünn, beispielsweise nur 1,5 bis 4 mm dick ausgeführt werden. Besonders vorteilhaft ist, die textilen Schichten mit einem hydrophobierten Mittel zu behandeln, z.B. zu beschichten. Diese Maßnahme erhöht die Abriebfestigkeit und stabilisiert die übermässig erhöhten Schlingen.

Im folgenden wird die Erfindung anhand einer Zeichnung beispielhaft näher erläutert. Es zeigen:
- Fig. 1: eine erfindungsgemäße Schutzummantelung in einem Querschnitt;
- Fig. 2: eine Schutzummantelung nach Fig. 1 mit einer dreischichtigen Klebschicht;
- Fig. 3: eine Kettstuhlwirkwaren-Veloursschicht in einer schematischen Draufsicht auf den Fadenverlauf.

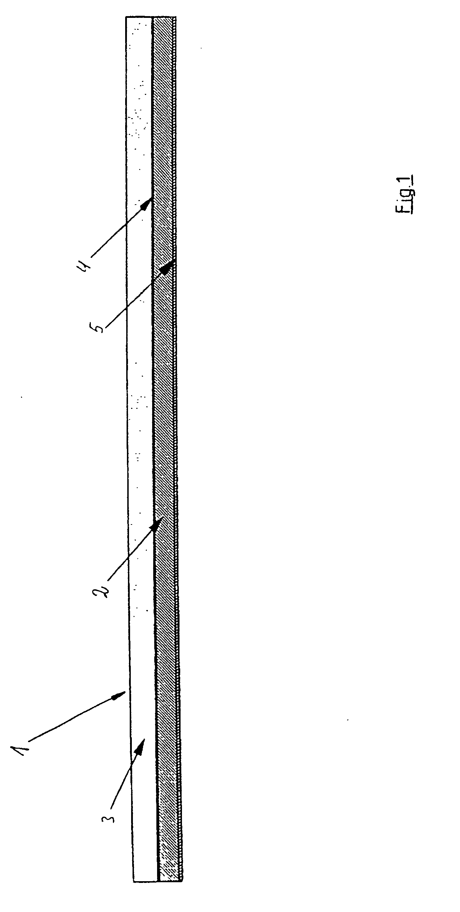

Eine erfindungsgemäße Schutzummantelung 1 (Fig. 1) weist eine bezüglich des zu schützenden Objekts objektseitige Textilie bzw. textile Schicht 2 aus einem Vlies, eine darauf angeordnete objektabgewandte Textilie bzw. textile Schicht 3 aus einem Kettstuhlwirkwaren-Velours sowie eine zwischen den Schichten 2 und 3 diese miteinander verbindenden Verklebung 4 auf. Objektseitig trägt die Schicht 2 eine vollflächige Verklebungsschicht 5.

Als Vliesstoffe bezeichnet man flexible, poröse Flächengebilde, die nicht durch die klassische Methode der Gewebebindung von Kette und Schuß oder durch Maschenbildung, sondern durch Verfestigung von Faservliesen hergestellt werden. Faservliese sind lockere Materialien aus natürlichen, synthetischen, organischen oder mineralischen Textilfasern, deren zusammenhalt im allgemeinen durch die den Fasern eigene Haftung gegeben ist. Hierbei können die Einzelfasern eine Vorzugsrichtung aufweisen oder als sog. Wirrfaservliese ungerichtet sein. Derartige Vliese können adhäsiv z.B. durch Verkleben oder Verschweißen der Fasern, mechanisch z.B. durch Nadeln oder durch den Einfluß von Wärme oder Chemikalien verfestigt sein. Erfindungsgemäß werden bevorzugt Nadelvliese eingesetzt, da diese gegenüber den anderen verfestigten Vliesen eine besonders gute Affinität zur Veloursschicht aufweisen.

Unter Wirkwaren versteht man Waren, die durch ein dem Stricken ähnliches Verfahren zur Herstellung von dehnbaren textilen Flächengebilden, die aus maschenförmig verbundenen Fadenschleifen bestehen, gebildet sind.

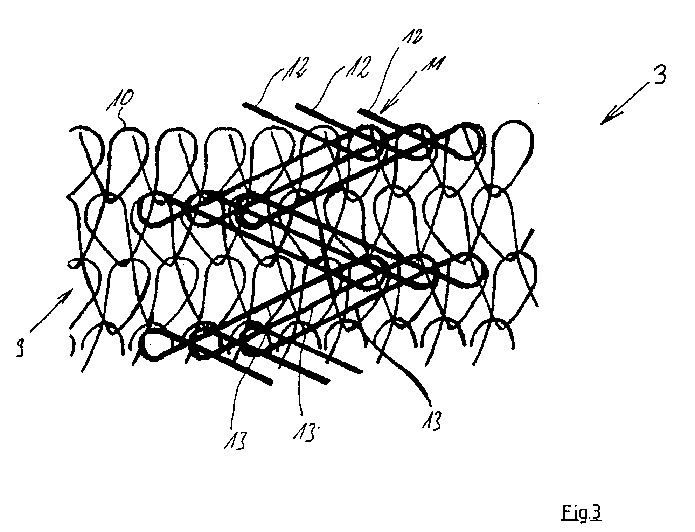

Die außenseitige Schicht 3 (Fig. 3) ist ein zweibarriges Kettstuhlwirkwaren-Velours. Als Warengrundbildung ist die erste Barre bzw. Unterkette 9 aus einem Synthetikfilament in geschlossener Trikotbildung gewirkt ausgebildet. Das die Unterkette 9 ausbildende Filament 10 ist vorzugsweise ein Multifilament, d.h., daß jeder Faden aus mehreren Einzelfäden, beispielsweise 5 bis 20, insbesondere 8 bis 12 Einzelfäden, ausgebildet ist. Als Garn bzw. Fadenmaterial wird bevorzugt Polyamid oder Polyester verwendet. Die Feinheit der verwendeten Filamente für die erste Barre bzw. Unterkette beträgt zwischen 30 und 80, insbesondere 40 bis 50 dtex (dtex = 0,1 tex; 1 tex = 1 g/km Filamentlänge). Beispielsweise wird ein Garn der Klassifikation dtex 44 F10PA verwendet, also ein Garn mit dtex 44, das aus 10 Polyamideinzelfasern aufgebaut ist.

Die zweite Barre des Kettstuhlwirkwaren-Velours bzw. Oberkette 11 ist ebenfalls aus einem Synthetikfilament 12 ausgebildet, wobei die zweite Barre 11 in sogenannter geschlossener Samtbindung ausgebildet ist. Durch diese Wirkart werden Schlingen 13 ausgebildet, welche sich quer bzw. senkrecht zur gedachten Fläche der Warengrundbildung 9 von der Fläche abstehend erstrecken, wobei die Schlingen 13 der zweiten Barre 11 in die erste Barre 9 eingewirkt sind. Das Material für die Filamente 12 der zweiten Barre 11 bzw. zur Ausbildung der Veloursschlingen 13 ist ein Polyamid oder ein Polyester, wobei Polyamid bevorzugt wird.

Das Filament ist bevorzugt ein Multifilament mit einer Feinheit von 60 bis 90 dtex, insbesondere 70 bis 80 dtex mit 5 bis 20, insbesondere 8 bis 12 Einzelfasern pro Filament, beispielsweise ein Filament der Klassifikation dtex 78 F10 bzw. dtex 76F9. Die Schlingenhöhe der Schlingen 13 der zweiten Barre 11 liegt erfindungsgemäß zwischen 0,9 bis 1,3 mm, wobei die Anzahl der Schlingen 13 zwischen 3.400 bis 3.600/cm² beträgt.

Das Flächengewicht des zweibarrigen Kettstuhlwirkwaren-Velours beträgt vorzugsweise zwischen 100 und 250 g/m², insbesondere 160 bis 220 g/m³, wobei die Gesamtdicke des Kettstuhlwirkwaren-Velours z.B. zwischen 1,05 mm und 1,4 mm liegt. Unterkette und Oberkette können aus unterschiedlich eingefärbten Filamenten gefertigt sein; beispielsweise kann die Oberkette schwarz und die Unterkette in Warnfarben bzw. Leuchtfarben wie gelb oder orange ausgeführt sein. Die Veloursschlingen 13 der zweiten Barre 11 sind mittels eines Rauhprozesses hochgerauht, d.h. quer zur Ebene der ersten Barre 9 ausgerichtet und zweckmäßigerweise thermofixiert. Bei der Thermofixierung wird die gerauhte Wirkware Heißluft zwischen 165 bis 190°C ausgesetzt, wodurch eine Ware erzielt wird, deren Schlingen sich unter Druckbelastung verformen, bei Entlastung jedoch nach einer gewissen Warte- bzw. Erholungszeit sich wieder aufrichten. Derartig ausgestaltete Schlingen 13 der zweiten Barre 11 sind zur Verwendung als Klettband bekannt, wobei die Schlingen des erfindungsgemäß verwendeten Kettstuhlwirkwarenvelours jedoch höher, insbesondere 10 % bis 40 % höher herausstehen, als die Schlingen bekannter Klettbänder. Insofern handelt es sich um ein neues Produkt, das für die Zwecke der Erfindung ausgedacht wurde.

Die erste textile Schicht 2 bzw. innere Schicht 2 ist ein Faservlies aus synthetischen Fasern. Dieses Vlies ist vorzugsweise ein vernadeltes Vlies, das eine hervorragende Verträglichkeit zum Velours gewährleistet. Ein thermisch oder chemisch verbundenes Vlies ist jedoch ebenfalls verwendbar. Als Material für die Vliesfasern werden vornehmlich synthetische Fasern, insbesondere Polyamid und/oder Polyester verwendet. Das Flächengewicht des Vlieses beträgt zweckmäßigerweise 40 bis 200 g/m², insbesondere 80 bis 120 g/m² bei einer bevorzugten Dicke zwischen 1 bis 3,5 mm, insbesondere 1,5 bis 2,5 mm.

Beide textile Schichten können eine Hydrophobierung aufweisen oder aus hydrophobierten Fasern bzw. Filamenten ausgebildet sein. Insbesondere können die Fasern eine an sich bekannte Beschichtung aus Polytetraflourethen aufweisen, welche die Faseroberfläche besonders glatt und unpolar ausgestaltet.

Die beiden textilen Schichten 2, 3 werden mit einem zwischen ihnen angeordneten Kleber bzw. einer Klebeschicht 4 zu einem Laminat laminiert. Die Klebeschicht 4 befindet sich zwischen einer Fläche des Vlieses 2 und der ersten Legebarre 9 der Kettstuhlwirkwaren-Veloursware 3, so daß die Schlingen 13 der Veloursware 3 von der Vliesschicht 2 abgewandt bzw. nach außen weg weisend angeordnet sind. Der Kleber bzw. die Kleberschicht 4 kann aus einem Sprühkleber, einem Klebefilm, einem Streukleber wie Puder oder Pulver, einer Kleberpaste oder einem Spinnfaserklebenetz bestehen. Bevorzugt ist, die Verklebung nicht vollflächig zwischen den Schichten aufzubringen, sondern Bereiche zwischen den beiden textilen Schichten unverklebt zu lassen. Dies kann beispielsweise dadurch erzielt werden, daß ein Klebefilm mit Lochstanzungen verwendet wird oder Streukleber wie Puder oder Pulver aufgestreut werden, wobei die zu bepudernde oder zu bestreuende Fläche mit einer Maske, beispielsweise einer Lochmaske, abgedeckt wird. Nach Abnahme der Lochmaske ergibt sich ein Rastermuster mit bepuderten und nicht bepuderten Bereichen. Darüber hinaus ist es möglich, Klebepaste aufzutropfen oder anderweitig aufzubringen, wobei ein Muster eingehalten wird, beispielsweise ein Punktraster. Bei der Verwendung eines Spinnfaserklebevlieses bzw. eines feinen, dünnen Spinnfaserklebenetzes werden durch die weitläufige, lockere Struktur des Spinnfaserklebenetzes nicht verklebte Bereiche zwischen den textilen Schichten gewährleistet. Die Verklebung wird bevorzugt mit thermoplastischen, wärmeaktivierbaren Klebstoffen durchgeführt, wobei der Kleber eine temperaturabhängige Viskosität aufweisen kann, die eine ausreichende Flexibilität bzw. Elastizität erlaubt. Der Kleber sollte so aufgebracht werden, daß in dem Bereich der Verklebungen der Klebstoff in die textilen Schichten eindringen kann, um sich dort zu verankern. Der Kleber muß ggf. auf die Verwendung im Fahrzeugbau abgestimmt sein, insbesondere muß er auch bei Temperaturen bis z.B. 105°C dauerfest sein. Bei der Verankerung des Klebstoffes in den textilen Schichten sollte ein Eindringen in die textilen Schichten gewährleistet sein, jedoch sollte der Klebstoff den Kettstuhlwirkwaren-Velours lediglich mit der ersten Barre 9 verkleben bzw. sich in der ersten Barre 9 verankern.

Vorzugsweise wird ein Spinnfaservlies-Klebstoff, das ist ein dünnes netzartiges Vlies aus thermoplastischen Klebstoffasern mit einem Flächengewicht von z.B. 5 bis 40 g/m², insbesondere 10 bis 30 g/m² bevorzugt von 12 bis 22 g/m² verwendet.

Die Laminierung der Schichten findet unter Druck bei gleichzeitiger thermischer Aktivierung des Klebstoffes statt, so daß der Kleber in beide Textilstrukturen eindringen kann und dort insbesondere nach Abfall der Temperatur eine Verankerung gewährleistet.

Auf die objektseitige Fläche des Nadelvlieses 2, die der Schicht 3 abgewandt ist, ist eine andere Kleberschicht 5 aufgebracht, mit welcher eine klebende Verbindung zum zu schützenden Objekt hergestellt wird. Diese Klebschicht 5 ist kontakt- bzw. berührungsklebend ausgebildet. Bei der Verwendung als in aufgerolltem Zustand geliefertes Wickelband muß der Kontaktkleber so ausgebildet sein, daß er am Nadelvlies hält und sich von den Veloursschlingen trennen läßt. Insofern muß er im Nadelvlies gut verankert sein, da andernfalls beim Abrollen von der Rolle der Kleber sich von der Schutzummantelungs-Unterseite, welche dem zu schützenden Objekt zugewandt ist, löst. Dies kann z.B. dadurch realisiert werden, daß der Kleber unter Temperatur und Druck auf die Nadelvliesschicht aufgebracht wird und das Band nachfolgend mit relativ geringerem Zug gerollt wird, so daß nur eine möglichst schwach adhäsive Verankerung zwischen Kleber und Veloursschlingen zustande kommt.

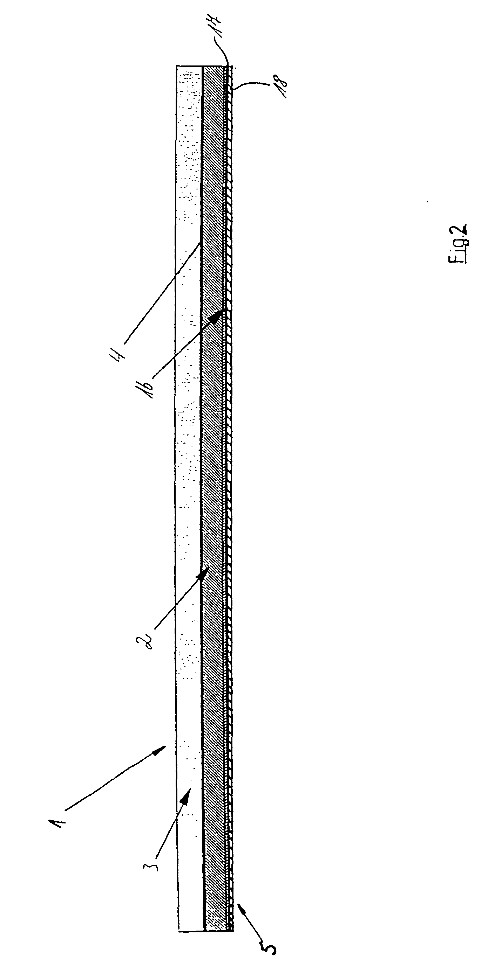

Nach einer besonderen Ausführungsform der Erfindung ist die Klebeschicht 5 dreischichtig (Fig. 2) mit einer dem Nadelvlies zugewandten ersten Klebeschicht 16, einer dünnen Kleberschicht-Trägerfolie 17 und einer auf der der Schicht 16 gegenüberliegenden, an der Trägerfolie 17 angeordneten zweiten Kleberschicht 18 vorgesehen. Die Klebschichten 16, 18 werden hierbei bevorzugt mit unterschiedlichen Viskositäten vorgesehen, wobei die Klebschicht 16 eine relativ niedrige Viskosität, eine sehr gute Haftung sowie ein relativ hohes Eindringvermögen in das Vlies aufweist. Die Klebschicht 18 weist eine andere Viskosität auf, die es ermöglicht, daß in aufgerolltem Zustand des Schutzummantelungsbandes die Haftung zu den Veloursschlingen lediglich so hoch ist, daß die Rolle in aufgerolltem Zustand verbleibt und sich nicht von selbst abwickelt. Das Ummantelungsband kann daher von der Rolle abgezogen werden, ohne daß die Kleberschicht 16 aus dem Nadelvlies gezogen wird, wobei jedoch andererseits eine ausreichende Haftung zum zu schützenden Objekt sichergestellt ist.

Darüber hinaus ist das Adhäsionsverhalten der Kleberschicht 18 auf die Klebkraft der Klebschicht 4 zwischen den textilen Schichten 2, 3 abgestimmt. Die notwendige Kraft für das Abrollen des Bandes von der Rolle ist niedriger als die Klebkraft bzw. Trennkraft, welche zum Trennen der beiden Schichten 2, 3 notwendig ist. Insofern ist verhindert, daß die Schichten 2, 3 während des Abrollens durch Überschreitung der Klebkraft der Klebschicht 4 voneinander getrennt bzw. delaminiert werden. Als vorteilhaft hat es sich herausgestellt, wenn die Abrollkraft, verursacht durch das Adhäsionsvermögen der Klebschicht 18 nur halb so groß ist wie die Trennkraft, welche überwunden werden muß, um die Schichten 2, 3 im Bereich der Klebung 4 voneinander zu trennen. Die Klebschicht 5 bzw. die Schichten 16, 18 werden bevorzugt aus Acrylatkleber ausgebildet, wobei zweckmäßigerweise bei Verwendung einer dreischichtigen Kleberschicht verschiedene Klebstoffe für die Schichten 16, 18 verwendet werden.

Das derart ausgebildete, erfindungsgemäße, aufgerollte Schutzummantelungsband wird von der Rolle abgezogen, mit der Klebschicht 18 auf das zu schützende Objekt aufgelegt, anschließend eine Umwicklung durchgeführt und dann schräg zur Erstreckungsrichtung des Objekts helixartig um das zu schützende Objekt herumgewickelt, wobei vorzugsweise eine Überdeckung, d.h. eine Überlappung der Schutzummantelung vorgesehen wird. Am Ende der Wicklung wird zweckmäßigerweise eine Abschlußwicklung mit einem klebenden Klebeband ausgeführt, so daß ein Öffnen der Wicklung verhindert wird.

Bei scheuernder Belastung der Schutzummantelung werden wechselnde Zug- und Druckbelastungen auf die hochstehenden Veloursschlingen der Kettstuhlwirkwaren-Veloursware aufgebracht. Diese Zug- und Druckbelastungen werden in die Unterkette weitergeleitet, wobei sich die Einleitung der Kraft in die Unterkette und in die benachbarten, schlingenausbildenden Filamente der Oberkette überlagert. Die gewirkte Unterkette kann durch ihre flexible Struktur der Spannung nachgeben und sich verformen, wobei Energie durch Reibung der Filamente aneinander abgebaut wird.

Zudem werden Scherkräfte, die nicht allein in der Kettstuhlwirkwaren-Veloursschicht abgebaut, über die Klebestellen in die unter dem Kettstuhlwirkwaren-Velours angeordnete Vliesschicht eingeleitet.

Zusätzlich zu den Eigenschaften der textilen Schichten ist die verklebung zwischen beiden Schichten ebenfalls begrenzt in der Lage, durch plastisch elastische Verformung Spannung im Laminat abzubauen.

Durch die spezielle Ausgestaltung der das Laminat bildenden Textilien wird erreicht, daß Spannungen abgebaut werden bzw. erst gar nicht entstehen. Durch eine ansetzende Zugbelastung findet wahrscheinlich eine vierstufige, stufenweise Längung des Laminats statt, wobei jede Längung zum einen Reibungen verursacht und zum anderen die Kraft bzw. Spannung, welche an - im Extremfall - einer Veloursschlinge angreift, bis in das Vlies pyramidal stufenförmig verteilt. Spannungen, die die Reißfestigkeit der Filamente übersteigen, werden vermieden.

Die stufenweise Längung bzw. die stufenweise pyramidale Spannungseinleitung erfolgt dadurch, daß in der ersten Stufe eine Veloursschlinge mit einer Zugkraft beaufschlagt wird. Die Veloursschlinge wird durch eine elastische Verformung, also mit einer Längung, nachgeben. Hierdurch wird auch eine Zugkraft in die benachbarten, vom gleichen Filament ausgebildeten Verloursschlingen eingeleitet, welche im Extremfall zu der Veloursschlinge, an der die Kraft anliegt, hin verzogen werden. In dem Bereich, in dem die Veloursschlinge in die Unterkette eingewirkt ist bzw. die Veloursschlingen eingewirkt sind, wird es durch die auf die Zugkraft hin entstehende Bewegung zum einen zu einem Zusammenziehen des Filamentbogens der Veloursschlinge in der Unterkette und zum anderen zu Reibungen zwischen Veloursschlingen-Filament und Unterketten-Filament kommen. Kann alleine hierdurch, also durch die mechanische Reaktion der zugbelasteten Veloursschlinge, ihrer unmittelbarer Nachbarn, sowie der Verankerung der einzelnen Veloursschlinge in der Unterkette die Spannung nicht abgebaut werden, wird die Spannung in die nächste Stufe eingeleitet, in dem die an einer Veloursschlinge angreifende Kraft über die zwei Schlingenbögen, mit der die Veloursschlinge in die Unterkette eingewirkt ist, an mehrere Schlingen und Filamente der Unterkette weitergeleitet wird.

Durch die vielen Berührungspunkte bzw. Schlingen der Filamente der Unterkette wird die in zwei Punkten eingetragene Spannung weitflächig verteilt, wobei die vielen Schlingen jeweils nur einen Bruchteil der eingetragenen Spannung übernehmen und der die Krafteinleitungsstellen umgebende Bereich elasisch nachgibt.

Durch die Reibung kann die Energie im Material abgebaut werden, wobei durch eine Hydrophobierung und das dadurch erreichte bessere Gleiten der Fasern aufeinander der Krafteinleitungsbereich, also der Bereich, in dem die Fasern gegeneinander verschoben werden können, vergrössert werden und damit auch der Energieabbau schonender für die einzelnen Fasern stattfindet. Somit wird durch die Hydrophobierung der erzeugte Materialverzug über einen weiteren Bereich verteilt.

Durch den erzeugten Materialverzug der Kettwirkwaren-Veloursschicht, insbesondere der unteren Barre, wird zwangsläufig auch eine Zugkraft bzw. Spannung über die im Verzugsbereich angeordneten Klebepunkte weitflächig verteilt in die Vliesschicht eingeleitet, welche ihrerseits durch einen überwiegend elastischen Verzug reagiert, wobei die Spannung, welche an den Ansatzstellen des Klebstoffs im Vlies angreift, direkt auf eine Vielzahl von Filamenten in der Vliesschicht und durch Reibung zwischen den Filamenten indirekt auf eine noch größere Zahl von Filamenten in der Vliesschicht einwirkt. Dadurch, daß in der Unterkette die Kraft sehr weitflächig verteilt wird, werden viele Klebepunkte mit der auftretenden Spannung beaufschlagt, so daß die Klebepunkte nicht überbelastet werden.

Durch den Aufbau des Laminats aus zwei speziellen textilen Schichten und dazwischen angeordneten, vorzugsweise teilbereichsweisen Klebestellen, wird eine in einem kleinen Bereich eingeleitete hohe Spannung von Schicht zu Schicht auf einen immer weiter flächig werdenden Bereich verteilt, wobei insbesondere durch eine punktuelle Verklebung der zweiten Textilschicht Spannung bzw. Energie weitgehend abgebaut wird.

Die verwendeten Materialien werden den während der Verwendung herrschenden Bedingungen, angepaßt. Insofern werden werden Textilien und Klebstoff ausgewählt, die gegen die z.B. in der Kabelisolierung vorhandenen und ggf. freigesetzten Weichmacher unempfindlich sind. Bei der Verwendung im Bereich von hydraulischen Anlagen sind die verwendeten Materialien beständig gegen Hydraulikflüssigkeit. Darüber hinaus behalten die Klebstoffe in einem weiten Temperaturbereich, beispielsweise von -30°C bis +110°C ohne wesentliche Einschränkung ihre Eigenschaften. Darüber hinaus sind die Materialien bei der Verwendung in Fahrzeugen aller Art zweckmäßigerweise öl-, fett- und möglichst lösungsmittelbeständig, sowie beständig gegen gebräuchliche, im Fahrzeug eingesetzte Medien.

Bei der Ummantelung von sicherheitsrelevanten Objekten kann es vorteilhaft sein, die äußere Schicht, also das Kettstuhlwirkwaren-Velours in einer für dieses Objekt festgelegten Farbe oder in einer üblichen Warn- bzw. Leuchtfarbe auszugestalten.

Zweckmäßigerweise entspricht das Brandverhalten des gesamten Ummantelungsmaterials den technischen Vorschriften der Fahrzeughersteller.

Bei der erfindungsgemäßen Schutzummantelung ist von Vorteil, daß diese sich in besonders einfacher und zuverlässiger Weise montieren läßt, wobei durch den erfindungsgemäßen Aufbau des Schutzummantelungslaminats in überraschender Weise ein neuartiger, sehr guter Abriebschutz erreicht wird. Darüber hinaus gewährleistet die erfindungsgemäße Ausgestaltung eines Schutzummantelungslaminats, insbesondere durch den Schlingenaufbau bzw. die Schlingenhöhe eine ausgezeichnete Geräuschdämmung. Des weiteren ist von Vorteil, daß die Schutzummantelung in an sich bekannter Weise mittels eines Klett- bzw. Pilzbandes in einem Fahrzeug angeordnet werden kann, so daß auch hierdurch den Bedürfnissen nach einer einfachen Montage Rechnung getragen werden kann.

Das erfindungsgemäße Schutzummantelungsmaterial wird bevorzugt in Form eines Wickelbandes auf einer Role bevorratet und das Band helixförmig um das zu schützende Objekt gewickelt. Mit gleich gutem Erfolg kann die Schutzummantelung bei Bedarf auch längs, einen Schlauch bildend, um das zu schützende Objekt gelegt werden. Die erfindungsgemäße Schutzummantelung kann sowohl in Kraftfahrzeugen als auch in Wasser- und Luftfahrzeugen eingesetzt werden. Die Anwendung kann jedoch auch im Maschinen- oder Anlagenbau, insbesondere in Bereichen, die vibrationsbelastet sind, erfolgen, insbesondere bei Generatoren, Kompressoren, Turbinen etc. Die Anwendung ist dabei nicht auf elektrische Kabel, Leitungen oder Kabelbäume beschränkt. Auch Treibstoffleitungen, hydraulische Leitungen u.ä. können als Scheuerschutz und, um Geräuschentwicklungen entgegenzuwirken, ummantelt werden. Darüber hinaus kann die erfindungsgemäße Schutzummantelung im Fahrzeugbau dort eingesetzt werden, wo Innenraumteile, beispielsweise Armaturenbretter, Holmverkleidungen u.ä., welche aneinander reiben oder klappern können, mit einem dazwischen angeordneten Klapperschutz versehen werden sollen. Hierbei kann die Schutzummantelung sowohl zwischen Kunststoffteilen als auch zwischen Kunststoffteilen und metallischen Karosserieteilen angeordnet werden. Das erfindungsgemäße Material zeichnet sich zudem durch eine hervorragende Geschmeidigkeit aus.

Wesentlich ist, daß erkannt worden ist, daß es nicht darauf ankommt, gemäß dem Stand der Technik die Außenseite möglichst hart bzw. abriebfest auszubilden, damit Scheuerkräfte ertragen werden können. Vielmehr ist wesentlich, die Außenseite relativ weich mit flexibler und z.T. elastischer Schlingenstruktur auszurüsten und mit einem objektseitigen Vliesmaterial zu versehen. Diese Kombination ausgewählter flächiger Textilien ergibt optimale Schutzwirkungen gegen Scheuereinwirkungen und optimale Schalldämmung und Schalldämpfung. Die bekannten Materialien oder Materialkombinationen gewährleisten entweder einen guten Scheuerschutz und unzureichende Schalldämmung und/oder Schalldämpfung oder umgekehrt.

## Patentansprüche

1. schutzummantelung für langgestreckte Objekte, insbesondere Kabel, Kabelbäume, Leitungen und dgl., wobei die Schutzummantelung einen zumindest zweischichtigen Aufbau aus zumindest zwei textilen Schichten (2, 3) ausweist, wobei zum zu schützenden Objekt hin eine erste textile Schicht (2) vorhanden ist, die aus einem Synthetikfaservlies ausgebildet ist, nach außen auf der ersten Schicht (2) eine zweite textile Schicht (3) angeordnet ist, und die beiden textilen Schichten (2, 3) zumindest stellen- bzw. teilbereichsweise miteinander verklebt sind,
**dadurch gekennzeichnet,**
**daß** die zweite textile Schicht (3) aus einem zweibarrigen Wirkwaren-Velours mit nach außen weisend angeordneten Veloursschlingen ausgebildet ist.

2. Schutzummantelung nach Anspruch 1,
**dadurch gekennzeichnet,**
**daß** die beiden textilen Schichten mit einer rasterförmigen bereichsweisen Verklebung miteinander verbunden sind.

3. Schutzummantelung nach Anspruch 1 und/oder 2,
**dadurch gekennzeichnet,**
**daß** die dem zu schützenden Objekt zugewandte Fläche des Vlieses (2) mit einer vollflächigen Klebschicht (5) versehen ist.

4. Schutzummantelung nach einem oder mehreren der vorhergehenden Ansprüche,
**dadurch gekennzeichnet,**
**daß** das die zweite textile Schicht (3) ausbildende Wirkwaren-Velours ein Kettstuhlwirkwarenvelours mit einer ersten Barre bzw. Unterkette (9) und einer zweiten Barre (11) bzw. Oberkette (11) ist.

5. Schutzummantelung nach einem oder mehreren der vorhergehenden Ansprüche,
**dadurch gekennzeichnet,**
**daß** die erste Barre bzw. Unterkette (9) in geschlossener Trikotbindung gewirkt ausgebildet ist.

6. Schutzummantelung nach einem oder mehreren der vorhergehenden Ansprüche,
**dadurch gekennzeichnet,**
**daß** das die Unterkette (9) ausbildende Filament (10) ein Multifilament ist.

7. Schutzummantelung nach einem oder mehreren der vorhergehenden Ansprüche,
**dadurch gekennzeichnet,**
**daß** das Multifilament aus 5 bis 20, insbesondere 8 bis 12 Einzelfäden ausgebildet ist.

8. Schutzummantelung nach einem oder mehreren der vorhergehenden Ansprüche,
**dadurch gekennzeichnet,**
**daß** das Filament aus Polyamid oder Polyester besteht.

9. Schutzummantelung nach einem oder mehreren der vorhergehenden Ansprüche,
**dadurch gekennzeichnet,**
**daß** die Feinheit der Filamente (10) für die erste Barre bzw. Unterkette (9) zwischen 30 und 80 dtex, insbesondere 40 bis 50 dtex beträgt.

10. Schutzummantelung nach einem oder mehreren der vorhergehenden Ansprüche,
**dadurch gekennzeichnet,**
**daß** das die Unterkette ausbildende Filament (10) eine Faser der Klassifikation dtex 44 F10PA ist.

11. Schutzummantelung nach einem oder mehreren der vorhergehenden Ansprüche,
**dadurch gekennzeichnet,**
**daß** die zweite Barre (11) in geschlossener Samtbildung ausgebildet ist, wobei hierdurch Schlingen (13) ausgebildet sind, welche sich quer bzw. senkrecht zur Fläche der Warengrundbildung bzw. ersten Barre (9) nach außen abstehend erstrecken, wobei die Schlingen (13) der zweiten Barre (11) in die erste Barre (9) eingewirkt angeordnet sind.

12. Schutzummantelung nach einem oder mehreren der vorhergehenden Ansprüche,
**dadurch gekennzeichnet,**
**daß** die Filamente (12) der zweiten Barre (11) bzw. der Veloursschlingen (13) aus Polyamid oder Polyester bestehen.

13. Schutzummantelung nach einem oder mehreren der vorhergehenden Ansprüche,
**dadurch gekennzeichnet,**
**daß** die die zweite Barre (11) ausbildenden Filamente (12) Multifilamente sind.

14. Schutzummantelung nach einem oder mehreren der vorhergehenden Ansprüche,
**dadurch gekennzeichnet,**
**daß** die die zweite Barre (11) ausbildenden Filamente (12) Filamente mit einer Feinheit von 30 bis 90 dtex, insbesondere 70 bis 80 dtex sind.

15. Schutzummantelung nach einem oder mehreren der vorhergehenden Ansprüche,
**dadurch gekennzeichnet,**
**daß** die die zweite Barre (11) ausbildenden Multifilamente (12) aus 5 bis 20, insbesondere 8 bis 12 Einzelfilamenten pro Filament (12) ausgebildet sind.

16. Schutzummantelung nach einem oder mehreren der vorhergehenden Ansprüche,
**dadurch gekennzeichnet,**
**daß** die die zweite Barre (11) ausbildenden Filamente (12) Filamente der Klassifikation dtex 78 F10 oder dtex 76F9 sind.

17. Schutzummantelung nach einem oder mehreren der vorhergehenden Ansprüche,
**dadurch gekennzeichnet,**
**daß** die Schlingenhöhe der Schlingen (13) der zweiten Barre (11) zwischen 0,9 bis 1,3 mm beträgt.

18. Schutzummantelung nach einem oder mehreren der vorhergehenden Ansprüche,
**dadurch gekennzeichnet,**
**daß** die Anzahl der Schlingen (13) in der zweiten Barre (11) zwischen 3.400 und 3.600/cm² beträgt.

19. Schutzummantelung nach einem oder mehreren der vorhergehenden Ansprüche,
**dadurch gekennzeichnet,**
**daß** das Flächengewicht des zweibarrigen Kettstuhlwirkwarenvelours zwischen 100 und 250 g/m², insbesondere 160 bis 220 g/m² beträgt.

20. Schutzummantelung nach einem oder mehreren der vorhergehenden Ansprüche,
**dadurch gekennzeichnet,**
**daß** die Gesamtdicke des Kettstuhlwirkwarenvelours zwischen 1,05 und 1,4 mm beträgt.

21. Schutzummantelung nach einem oder mehreren der vorhergehenden Ansprüche,
**dadurch gekennzeichnet,**
**daß** Unterkette und Oberkette aus unterschiedlich eingefärbten Filamenten (10, 12) gefertigt sind.

22. Schutzummantelung nach einem oder mehreren der vorhergehenden Ansprüche,
**dadurch gekennzeichnet,**
**daß** die Filamente (10, 12) der Unterkette und/oder Oberkette hydrophobiert sind.

23. Schutzummantelung nach einem oder mehreren der vorhergehenden Ansprüche,
**dadurch gekennzeichnet,**
**daß** die Veloursschlingen (13) der zweiten Barre (11) durch Rauhprozeß hochgerauhte und thermofixierte Veloursschlingen sind.

24. Schutzummantelung nach einem oder mehreren der vorhergehenden Ansprüche,
**dadurch gekennzeichnet,**
**daß** die erste textile Schicht (2) bzw. das Synthetikfaservlies ein vernadeltes Vlies ist.

25. Schutzummantelung nach einem oder mehreren der vorhergehenden Ansprüche,
**dadurch gekennzeichnet,**
**daß** das Vlies (2) ein thermisch oder chemisch verbundenes Vlies ist.

26. Schutzummantelung nach einem oder mehreren der vorhergehenden Ansprüche,
**dadurch gekennzeichnet,**
**daß** das Vlies (2) aus Polyamid und/oder Polyesterfasern besteht.

27. Schutzummantelung nach einem oder mehreren der vorhergehenden Ansprüche,
**dadurch gekennzeichnet,**
**daß** das Flächengewicht des Vlieses (2) 40 bis 220 g/m², insbesondere 80 bis 120 g/m² beträgt.

28. Schutzummantelung nach einem oder mehreren der vorhergehenden Ansprüche,
**dadurch gekennzeichnet,**
**daß** das Vlies (2) eine Dicke zwischen 1 bis 3,5 mm, insbesondere 1,5 bis 2,5 mm aufweist.

29. Schutzummantelung nach einem oder mehreren der vorhergehenden Ansprüche,
**dadurch gekennzeichnet,**
**daß** die das Vlies ausbildenden Fasern hydrophobiert sind.

30. Schutzummantelung nach einem oder mehreren der vorhergehenden Ansprüche,
**dadurch gekennzeichnet,**
**daß** die Klebeschicht (4) sich zwischen einer Fläche des Vlieses (2) und der ersten Legebarre (9) des Kettstuhlwirkwarenvelours (3) befindet, so daß die Schlingen (13) der Veloursware (3) von der Vliesschicht (2) nach außen weg weisend bzw. abstehend angeordnet sind.

31. Schutzummantelung nach einem oder mehreren der vorhergehenden Ansprüche,
**dadurch gekennzeichnet,**
**daß** der Kleber (4) bzw. die Klebeschicht (4) aus einem Sprühkleber, einem Klebefilm, einem Streukleber, einer Kleberpaste oder einem Spinnfaserklebenetz ausgebildet ist.

32. Schutzummantelung nach einem oder mehreren der vorhergehenden Ansprüche,
**dadurch gekennzeichnet,**
**daß** die Kleberschicht (4) bzw. die Verklebung aus thermoplastischen, wärmeaktivierbaren Klebstoffen besteht.

33. Schutzummantelung nach einem oder mehreren der vorhergehenden Ansprüche,
**dadurch gekennzeichnet,**
**daß** die Klebschicht aus einem Spinnfaservlies-Klebstoff bzw. einem dünnen netzartigen Vlies aus thermoplastischen Klebstofffasern mit einem Flächengewicht von 5 bis 40 g/m², insbesondere 10 bis 30 g/m² bevorzugt von 12 bis 22 g/m² besteht.

34. Schutzummantelung nach einem oder mehreren der vorhergehenden Ansprüche,
**dadurch gekennzeichnet,**
**daß** die auf die der Schicht (3) abgewandten und dem zu schützenden Objekt zugewandten Fläche des Nadelvlieses (2) aufgebrachte Kleberschicht (5) ein Kontakt- bzw. Berührungsklebstoff ist.

35. Schutzummantelung nach einem oder mehreren der vorhergehenden Ansprüche,
**dadurch gekennzeichnet,**
**daß** die Verklebungsschicht (5) dreischichtig mit einer dem Nadelvlies zugewandten ersten Kleberschicht (16) einer dünnen Kleberschichtträgerfolie (17) und einer auf der der Schicht (16) gegenüberliegenden, an der Tägerfolie (17) angeordneten zweiten Kleberschicht (18) besteht.

36. Schutzummantelung nach einem oder mehreren der vorhergehenden Ansprüche,
**dadurch gekennzeichnet,**
**daß** die Kleberschichten (16, 18) unterschiedliche Viskositäten aufweisen.

37. Schutzummantelung nach einem oder mehreren der vorhergehenden Ansprüche,
**dadurch gekennzeichnet,**
**daß** die Kleberschichten (16, 18) aus unterschiedlichen Klebstoffen ausgebildet sind.

38. Schutzummantelung nach einem oder mehreren der vorhergehenden Ansprüche,
**dadurch gekennzeichnet,**
**daß** die Kleberschicht (18) eine Klebkraft aufweist, die derart hoch ist, daß die notwendige Kraft, um die zu einer Rolle aufgerollte Schutzummantelung abzurollen, niedriger ist als die Klebkraft bzw. Trennkraft, welche zum Trennen der beiden Schichten (2, 3) im Bereich der Verklebung (3, 4) notwendig ist.

39. Schutzummantelung nach einem oder mehreren der vorhergehenden Ansprüche,
**dadurch gekennzeichnet,**
**daß** die Kleberschichten (16, 18) aus einem Acrylatkleber ausgebildet sind.

40. Schutzummantelung nach einem oder mehreren der vorhergehenden Ansprüche,
**dadurch gekennzeichnet,**
**daß** die Schutzummantelung ein Wickelband ist, welches in aufgerolltem Zustand bzw. in Form von Rollen bevorratet wird.

41. Verwendung einer Schutzummantelung nach einem oder mehreren der vorhergehenden Ansprüche als Scheuerschutz und zur Schalldämmung bzw. Schalldämpfung in Land-, Wasser- und Luftfahrzeugen.

42. Verwendung einer Schutzummantelung nach einem oder mehreren der Ansprüche 1 bis 38 als Scheuerschutz und zur Geräuschdämmung bzw. Geräuschdämpfung in Maschinen und/oder Anlagen bzw. Maschinen und/oder Anlagenteilen wie Generatoren, Kompressoren, Turbinen und dgl.

43. Verwendung einer Schutzummantelung nach einem oder mehreren der Ansprüche 1 bis 38 als Scheuerschutz und zur Geräuschdämmung bzw. Geräuschdämpfung von Treibstoffleitungen, hydraulischen Leitungen und dgl.

44. Verwendung einer Schutzummantelung nach einem oder mehreren der Ansprüche 1 bis 38 als Scheuerschutz und zur Geräuschdämmung bzw. Geräuschdämpfung im Fahrzeugbau zwischen Innenraumteilen wie Armaturenbrettern und Holmverkleidungen und/oder Karosserieteilen.

## Claims

1. Protective sheath for elongated objects, in particular cables, cable harnesses, lines and the like, in which case the protective sheath has an at least two-layer structure composed of at least two textile layers (2, 3), in which case there is a first textile layer (2) towards the object to be protected, which first textile layer is formed from a synthetic fibre nonwoven, a second textile layer (3) is arranged on the outside of the first layer (2), and the two textile layers (2, 3) are adhesively bonded to one another, at least in places or in subareas, **characterized in that** the second textile layer (3) is formed from a two-bar knitted velour with velour loops arranged pointing outwards.

2. Protective sheath according to Claim 1, **characterized in that** the two textile layers are connected to one another by adhesive bonding in the form of grid patterns in places.

3. Protective sheath according to Claim 1 and/or 2, **characterized in that** that surface of the nonwoven (2) which faces the object to be protected is provided with an adhesive layer (5) over the entire area.

4. Protective sheath according to one or more of the preceding claims, **characterized in that** the knitted velour which forms the second textile layer (3) is a warped-knitted velour with a first bar or back warp (9) and a second bar (11) or front warp (11).

5. Protective sheath according to one or more of the preceding claims, **characterized in that** the first bar or back warp (9) is knitted in a closed tricot weave.

6. Protective sheath-according to one or more of the preceding claims, **characterized in that** the filament (10) which forms the back warp (9) is a multifilament.

7. Protective sheath according to one or more of the preceding claims, **characterized in that** the multifilament is formed from 5 to 20, in particular 8 to 12, individual threads.

8. Protective sheath according to one or more of the preceding claims, **characterized in that** the filament is composed of polyamide or polyester.

9. Protective sheath according to one or more of the preceding claims, **characterized in that** the fineness of the filaments (10) for the first bar or back warp (9) is between 30 and 80 dtex, in particular between 40 and 50 dtex.

10. Protective sheath according to one or more of the preceding claims, **characterized in that** the filament (10) which forms the back warp is a fibre with the classification dtex 44 F10PA.

11. Protective sheath according to one or more of the preceding claims, **characterized in that** the second bar (11) is formed in the closed velour, with loops (13) being formed in this way, which extend projecting outward transversely or at right angles to the surface of the basic fabric or first bar (9), with the loops (13) of the second bar (11) being arranged woven into the first bar (9).

12. Protective sheath according to one or more of the preceding claims, **characterized in that** the filaments (12) of the second bar (11) and of the velour loops (13) are composed of polyamide or polyester.

13. Protective sheath according to one or more of the preceding claims, **characterized in that** the filaments (12) which form the second bar (11) are multifilaments.

14. Protective sheath according to one or more of the preceding claims, **characterized in that** the filaments (12) which form the second bar (11) are filaments with a fineness of 30 to 90 dtex, in particular 70 to 80 dtex.

15. Protective sheath according to one or more of the preceding claims, **characterized in that** the multifilaments (12) which form the second bar (11) are formed from 5 to 20, in particular 8 to 12, individual filaments per filament (12).

16. Protective sheath according to one or more of the preceding claims, **characterized in that** the filaments (12) which form the second bar (11) are filaments with the classification dtex 78 F10 or dtex 76F9.

17. Protective sheath according to one or more of the preceding claims, **characterized in that** the loop height of the loops (13) of the second bar (11) is between 0.9 and 1.3 mm.

18. Protective sheath according to one or more of the preceding claims, **characterized in that** the number of loops (13) in the second bar (11) is between 3400 and 3600/cm².

19. Protective sheath according to one or more of the preceding claims, **characterized in that** the mass per unit area of the two-bar warp-knitted velour is between 100 and 250 g/m², in particular between 160 and 220 g/m².

20. Protective sheath according to one or more of the preceding claims, **characterized in that** the overall thickness of the warp-knitted velour is between 1.05 and 1.4 mm.

21. Protective sheath according to one or more of the preceding claims, **characterized in that** the back warp and the front warp are manufactured from filaments (10, 12) of different colour.

22. Protective sheath according to one or more of the preceding claims, **characterized in that** the filaments (10, 12) in the back warp and/or front warp are made hydrophobic.

23. Protective sheath according to one or more of the preceding claims, **characterized in that** the velour loops (13) of the second bar (11) are velour loops which have been roughened up by a roughening process, and have been thermofixed.

24. Protective sheath according to one or more of the preceding claims, **characterized in that** the first textile layer (2), or the synthetic fibre nonwoven, is a needle-punched nonwoven.

25. Protective sheath according to one or more of the preceding claims, **characterized in that** the nonwoven (2) is a thermally or chemically bonded nonwoven.

26. Protective sheath according to one or more of the preceding claims, **characterized in that** the nonwoven (2) is composed of polyamide and/or polyester fibres.

27. Protective sheath according to one or more of the preceding claims, **characterized in that** the mass per unit area of the nonwoven (2) is 40 to 220 g/m², in particular 80 to 120 g/m².

28. Protective sheath according to one or more of the preceding claims, **characterized in that** the nonwoven (2) has a thickness of between 1 and 3.5 mm, in particular of between 1.5 and 2.5 mm.

29. Protective sheath according to one or more of the preceding claims, **characterized in that** the fibres which form the nonwoven are made hydrophobic.

30. Protective sheath according to one or more of the preceding claims, **characterized in that** the adhesive layer (4) is located between one surface of the nonwoven (2) and the first guide bar (9) of the warp-knitted velour (3), so that the loops (13) of the velour material (3) are arranged such that they point outwards away from or project from the nonwoven layer (2).

31. Protective sheath according to one or more of the preceding claims, **characterized in that** the adhesive (4) or the adhesive layer (4) is formed from a spray adhesive, an adhesive film, a scattered adhesive, an adhesive paste or a staple fibre adhesive network.

32. Protective sheath according to one or more of the preceding claims, **characterized in that** the adhesive layer (4) or the adhesive bonding is composed of thermoplastic adhesives, which can be activated by heat.

33. Protective sheath according to one or more of the preceding claims, **characterized in that** the adhesive layer is composed of staple fibre nonwoven adhesive or a thin network-like nonwoven composed of thermoplastic adhesive fibres with a mass per unit area of 5 to 40 g/m², in particular 10 to 30 g/m² and preferably 12 to 22 g/m².

34. Protective sheath according to one or more of the preceding claims, **characterized in that** the adhesive layer (5) which is applied to that surface of the needle-punched nonwoven (2) which faces away from the layer (3) and faces the object to be protected is a contact adhesive.

35. Protective sheath according to one or more of the preceding claims, **characterized in that** the adhesive bonding layer (5) comprises three layers with a first adhesive layer (16) facing the needle-punched nonwoven, a thin adhesive layer base film (17), and a second adhesive layer (18) which is arranged on the base layer (17) and is opposite the layer (16).

36. Protective sheath according to one or more of the preceding claims, **characterized in that** the adhesive layers (16, 18) have different viscosities.

37. Protective sheath according to one or more of the preceding claims, **characterized in that** the adhesive layers (16, 18) are formed from different adhesives.

38. Protective sheath according to one or more of the preceding claims, **characterized in that** the adhesive layer (18) has an adhesion force which is high enough that the required force in order to unroll the protective sheath which has been rolled up to form a roll is less than the adhesion force or separating force which is required to separate the two layers (2, 3) in the region of the adhesive bonding (3, 4).

39. Protective sheath according to one or more of the preceding claims, **characterized in that** the adhesive layers (16, 18) are formed from an acrylic adhesive.

40. Protective sheath according to one or more of the preceding claims, **characterized in that** the protective sheath is a wound strip which is stored in the rolled-up state or in the form of rolls.

41. Use of a protective sheath according to one or more of the preceding claims for chafing protection and for silencing or noise attenuation in landcraft, watercraft and aircraft.

42. Use of a protective sheath according to one or more of Claims 1 to 40 for chafing protection and for silencing and noise attenuation in machines and/or systems and machines and/or system parts such as generators, compressors, turbines and the like.

43. Use of a protective sheath according to one or more of Claims 1 to 40 for chafing protection and for silencing and noise attenuation for fuel lines, hydraulic lines and the like.

44. Use of a protective sheath according to one or more of Claims 1 to 40 for chafing protection and for silencing and noise attenuation in vehicle construction, between interior parts such as dashboards and strut linings, and/or bodywork parts.

## Revendications

1. Gaine protectrice pour objets de forme allongée, en particulier pour câbles, faisceaux de câbles, conduites et analogues, la gaine présentant une construction à au moins deux couches faite d'au moins deux couches textiles (2, 3), une première couche textile (2) qui est constituée par un non tissé de fibres synthétiques étant placée vers l'objet à protéger, une deuxième couche textile (3) étant disposée vers l'extérieur sur la première couche (2) et les deux couches textiles (2, 3) étant collées l'une à l'autre de façon au moins localisée ou par zones partielles, **caractérisée en ce que** la deuxième couche textile (3) est constituée par un velours tricoté à deux barres possédant des boucles de velours disposées pour pointer vers l'extérieur.

2. Gaine protectrice selon la revendication 1, **caractérisée en ce que** les deux couches textiles sont réunies entre elles par un collage localisé tramé.

3. Gaine protectrice selon la revendication 1 et/ou 2, **caractérisée en ce que** la surface du non tissé (2) qui est dirigée vers l'objet à protéger est munie d'une couche de colle (5) sur toute sa surface.

4. Gaine protectrice selon l'une ou plusieurs des revendications précédentes, **caractérisée en ce que** le velours tricoté qui forme la deuxième couche textile (3) est un velours tricoté sur métier chaîne comportant une première barre ou chaîne inférieure (9) et une deuxième barre (11) ou chaîne supérieure (11).

5. Gaine protectrice selon l'une ou plusieurs des revendications précédentes, **caractérisée en ce que** la première barre ou chaîne inférieure (9) est réalisée tricotée dans une armure de tricot fermée.

6. Gaine protectrice selon l'une ou plusieurs des revendications précédentes, **caractérisée en ce que** le filament (10) qui forme la chaîne inférieure (9) est un multifilament.

7. Gaine protectrice selon l'une ou plusieurs des revendications précédentes, **caractérisée en ce que** le multifilament est formé de 5 à 20, et en particulier de 8 à 12 fils élémentaires.

8. Gaine protectrice selon l'une ou plusieurs des revendications précédentes, **caractérisée en ce que** le filament est fait de polyamide ou de polyester.

9. Gaine protectrice selon l'une ou plusieurs des revendications précédentes, **caractérisée en ce que** la finesse des filaments (10) prévus pour la première barre ou la chaîne inférieure (9) est comprise entre 30 et 80 dtex, en particulier entre 40 et 50 dtex.

10. Gaine protectrice selon l'une ou plusieurs des revendications précédentes, **caractérisée en ce que** le filament (10) formant la chaîne inférieure est une fibre de la classification dtex 44 F10PA.

11. Gaine protectrice selon l'une ou plusieurs des revendications précédentes, **caractérisée en ce que** la deuxième barre (11) est réalisée en formation velours fermée, dans laquelle, sous cet effet, il se forme des boucles (13) qui s'étendent en saillie vers l'extérieur transversalement ou perpendiculairement à la surface de la formation du fond de produit ou à la première barre (9), les boucles (13) de la deuxième barre (11) étant intégrées dans la première barre (9) par le tricotage.

12. Gaine protectrice selon l'une ou plusieurs des revendications précédentes, **caractérisée en ce que** les filaments (12) de la deuxième barre (11) ou des boucles de velours (13) sont faits de polyamide ou de polyester.

13. Gaine protectrice selon l'une ou plusieurs des revendications précédentes, **caractérisée en ce que** les filaments (12) qui forment la deuxième barre (11) sont des multifilaments.

14. Gaine protectrice selon l'une ou plusieurs des revendications précédentes, **caractérisée en ce que** les filaments (12) qui forment la deuxième barre (11) sont des filaments d'une finesse comprise entre 30 et 90 dtex, en particulier entre 70 et 80 dtex.

15. Gaine protectrice selon l'une ou plusieurs des revendications précédentes, **caractérisée en ce que** les multifilaments (12) qui forment la deuxième barre (11) sont composés de 5 à 20, et en particulier de 8 à. 12 filaments élémentaires par filament (12).

16. Gaine protectrice selon l'une ou plusieurs des revendications précédentes, **caractérisée en ce que** les filaments (12) qui forment la deuxième barre (11) sont des filaments de la classification dtex 78 F10 ou dtex 76F9.

17. Gaine protectrice selon l'une ou plusieurs des revendications précédentes, **caractérisée en ce que** la hauteur des boucles (13) de la deuxième barre (11) est comprise entre 0,9 et 1,3 mm.

18. Gaine protectrice selon l'une ou plusieurs des revendications précédentes, **caractérisée en ce que** le nombre des boucles (13) contenues dans la deuxième barre (11) est compris entre 3400 et 3600/cm².

19. Gaine protectrice selon l'une ou plusieurs des revendications précédentes, **caractérisée en ce que** le poids par unité de surface du velours tricoté sur métier chaîne à deux barres est compris entre 100 et 250 g/m², en particulier entre 160 et 220 g/m².

20. Gaine protectrice selon l'une ou plusieurs des revendications précédentes, **caractérisée en ce que** l'épaisseur totale du velours tricoté sur métier chaîne est comprise entre 1,05 et 1,4 mm.

21. Gaine protectrice selon l'une ou plusieurs des revendications précédentes, **caractérisée en ce que** la chaîne inférieure et la chaîne supérieure sont fabriquées à partir de filaments (10, 12) diversemment colorés.

22. Gaine protectrice selon l'une ou plusieurs des revendications précédentes, **caractérisée en ce que** les filaments (10, 12) de la chaîne inférieure et/ou de la chaîne supérieure sont rendus hydrophobes.

23. Gaine protectrice selon l'une ou plusieurs des revendications précédentes, **caractérisée en ce que** les boucles de velours (13) de la deuxième barre (11) sont des boucles de velours rendues fortement rugueuses par un procédé de grattage et sont thermofixées.

24. Gaine protectrice selon l'une ou plusieurs des revendications précédentes, **caractérisée en ce que** la première couche textile (2) ou le non tissé synthétique est un non tissé aiguilleté.

25. Gaine protectrice selon l'une ou plusieurs des revendications précédentes, **caractérisée en ce que** le non tissé (2) est un non tissé lié thermiquement ou chimiquement.

26. Gaine protectrice selon l'une ou plusieurs des revendications précédentes, **caractérisée en ce que** le non tissé (2) est composé de fibres de polyamide et/ou de polyester.

27. Gaine protectrice selon l'une ou plusieurs des revendications précédentes, **caractérisée en ce que** le poids par unité de surface du non tissé (2) est compris entre 40 et 220 g/m², en particulier entre 80 et 120 g/m²

28. Gaine protectrice selon l'une ou plusieurs des revendications précédentes, **caractérisée en ce que** le non tissé (2) présente une épaisseur comprise entre 1 et 3,5 mm, en particulier entre 1,5 et 2,5 mm.

29. Gaine protectrice selon l'une ou plusieurs des revendications précédentes, **caractérisée en ce que** les fibres formant le non tissé ont été rendues hydrophobes.

30. Gaine protectrice selon l'une ou plusieurs des revendications précédentes, **caractérisée en ce que** la couche de colle (4) se trouve entre une surface du non tissé (2) et la première barre de pose (9) du velours tricoté sur métier chaîne (3), de sorte que les boucles (13) de la matière velours (3) sont disposées de façon à pointer ou à être en saillie vers l'extérieur à partir de la couche non tissée (2).

31. Gaine protectrice selon l'une ou plusieurs des revendications précédentes, **caractérisée en ce que** la colle (4) ou la couche de colle (4) est formée d'une colle pulvérisée, d'un film de colle, d'une colle dispersée, d'une pâte de colle ou d'un réseau de colle sous forme de fibres filées.

32. Gaine protectrice selon l'une ou plusieurs des revendications précédentes, **caractérisée en ce que** la couche de colle (4) ou le collage est composé de matières adhésives thermoplastiques pouvant être activées par la chaleur.

33. Gaine protectrice selon l'une ou plusieurs des revendications précédentes, **caractérisée en ce que** la couche de colle est composée d'une matière adhésive sous la forme d'un non tissé de fibres filées, ou d'un non tissé mince en réseau composé de fibres de matières adhésives thermoplastiques ayant un poids par unité de surface compris entre 5 et 40 g/m², en particulier entre 10 et 30 g/m², de préférence entre 12 et-22 g/m².

34. Gaine protectrice selon l'une ou plusieurs des revendications précédentes, **caractérisée en ce que** la couche de colle (5) appliquée sur la surface du non tissé aiguilleté (2) qui est détournée de la couche (3) et dirigée vers l'objet à protéger est une matière adhésive du type adhérant par simple pression ou contact.

35. Gaine protectrice selon l'une ou plusieurs des revendications précédentes, **caractérisée en ce que** la couche d'encollage (5) est composée de trois couches, avec une première couche de colle (16) d'une mince pellicule de support de couche de colle (17), cette couche étant tournée vers le non tissé aiguilleté, et une deuxième couche de colle (18) qui est disposée sur la pellicule de support (17) à l'opposé de la couche (16).

36. Gaine protectrice selon l'une ou plusieurs des revendications précédentes, **caractérisée en ce que** les couches de colle (16, 18) présentent des viscosités différentes.

37. Gaine protectrice selon l'une ou plusieurs des revendications précédentes, **caractérisée en ce que** les couches de colle (16, 18) sont composées de diverses matières adhésives.

38. Gaine protectrice selon l'une ou plusieurs des revendications précédentes, **caractérisée en ce que** la couche de colle (18) présente une force adhésive qui a un niveau tel que la force nécessaire pour dérouler la gaine protectrice enroulée en un rouleau soit plus faible que la force adhésive ou force de séparation qui est nécessaire pour séparer les deux couches (2, 3) dans la zone du collage (3, 4).

39. Gaine protectrice selon l'une ou plusieurs des revendications précédentes, **caractérisée en ce que** les couches de colle (16, 18) sont constituées par une colle acrylate.

40. Gaine protectrice selon l'une ou plusieurs des revendications précédentes, **caractérisée en ce que** la gaine protectrice est une bande enroulée qui est présentée à l'état enroulé ou en forme de rouleaux.

41. Utilisation d'une gaine protectrice selon l'une ou plusieurs des revendications précédentes en qualité de protection contre le frottement et pour l'isolation acoustique ou l'absorption acoustique dans les véhicules terrestres, nautiques et aériens.

42. Utilisation d'une gaine protectrice selon l'une ou plusieurs des revendications 1 à 40, en qualité de protection contre le frottement et pour l'isolation acoustique ou l'absorption acoustique dans des machines et/ou installations ou machines et/ou parties d'installation, telles que des génératrices, compresseurs, turbines et analogues.

43. Utilisation d'une gaine protectrice selon l'une ou plusieurs des revendications 1 à 40, en qualité de protection contre le frottement et pour l'isolation acoustique ou l'absorption acoustique de conduites de carburant, conduites hydrauliques et analogues.

44. Utilisation d'une gaine protectrice selon l'une ou plusieurs des revendications 1 à 40, en qualité de protection contre le frottement et pour l'isolation acoustique ou l'absorption des bruits dans la construction automobile entre des éléments d'habitacle tels que des tableaux de bord et revêtements de longerons et/ou parties de carrosserie.
